# EUROPEAN PATENT APPLICATION

(11) **EP 4 438 287 A1**
(43) Date of publication of application: **02.10.2024**
(21) Application number: 23166077.0
(22) Date of filing: 31.03.2023
(51) Int. Cl.: B32B 1/08, B32B 5/02, B32B 15/08, B32B 15/14, B32B 15/20, B32B 27/20, B32B 27/28

(54) **STORAGE TANK FOR LIQUIFIED GAS, AIRCRAFT OR SPACECRAFT COMPRISING SUCH A STORAGE TANK, AND FIBRE METAL LAMINATES**

(71) Applicant: Airbus Operations GmbH, 21129 Hamburg (DE); Airbus SAS, 31700 Blagnac Cedex (FR)
(72) Inventor: LINDE, Peter, 21129 Hamburg (DE); LENCZOWSKI, Blanka, 21129 Hamburg (DE)
(74) Representative: Isarpatent

(57) **Abstract**

The present invention proposes a storage tank (1) for liquified gas, in particular for liquid hydrogen (32), comprising a vessel (2) having a vessel wall (7) formed from a fibre metal laminate (8; 8'; 8"; 8‴) including metal layers (9) formed with an aluminum alloy and one or more synthetic layers (10; 10'; 10"; 10‴) with reinforcing fibres (14; 15) embedded in a thermoplastic matrix (13). Further, an aircraft or spacecraft (100) comprising such a storage tank (1) as well as a hydrogen-based propulsion system (105, 106) configured to be supplied with hydrogen at least from the storage tank (1) is proposed. Further, fibre metal laminates (8; 8'; 8"; 8‴) are proposed.

## Description

### TECHNICAL FIELD OF THE INVENTION

The present invention relates to a storage tank for liquified gas, to an aircraft or spacecraft comprising such a storage tank as well as a hydrogen-based propulsion system, and to fibre metal laminates.

### TECHNICAL BACKGROUND

Even though the invention may be useful in a variety of applications, the invention and the underlying problem will be described in the following in greater detail and exemplary manner with respect to a storage tank for liquid hydrogen intended for installation in a hydrogen-powered aircraft, but without limiting the invention to that effect.

In order to avoid the emissions e.g. of carbon dioxide produced by conventional kerosene-powered aircraft, it has been suggested to use hydrogen-based propulsion in aircraft, using hydrogen stored aboard the aircraft in storage tanks.

It would hence be desirable to be able to store liquefied gas such as hydrogen, in particular aboard an aircraft, in a reliable and light-weight manner.

Fibre metal laminates formed as hybrid composite materials, comprising alternating layers of metallic and plastic materials, such as polymers, have also been described. Such materials can be advantageous in that they have less weight and a better fatigue behaviour than a single sheet solid metal. Exemplary fibre metal laminates comprise aluminum alloy layers and aramid fibre-reinforced or glass-fibre reinforced polymer layers.

Fibre metal laminates are resilient and reliable materials suitable for aeronautical use. For example, a material known as GLARE is used in the manufacturing of aircraft, e.g. as a fuselage material in the Airbus A380 with high strength performance, increased damage tolerance and considerable weight savings. GLARE comprises layers of an aluminium alloy as well as interposed layers of glass fibre-reinforced epoxy resin.

Moreover, a fibre metal laminate comprising metal layers made from an AlMg alloy or AlMgSc alloy and layers of a thermoplastic synthetic material with embedded reinforcing fibres, for example glass fibres, carbon fibres or Zylon^{®} fibres, has been described in DE 10 2011 006 032 A1 and WO 2012 / 127 038 A2.

A method of friction stir welding of component parts containing thermoplastic as well as metal layers is described in US 10,456,985 B2.

A carbon fibre with electrically insulating coating is described in EP 3 461 620 A1.

A fibre metal laminate comprising electrically insulated carbon fibres is described in WO 2020 / 229 627 A1.

A method to deposit a coating around individual carbon fibres for battery applications has been described by Leijonmarck, S., et al., "Solid polymer electrolyte-coated carbon fibres for structural and novel micro batteries", Composites Science and Technology, Vol. 89, 2013, p. 149-157.

### SUMMARY OF THE INVENTION

In view of this background, a problem to be solved by the present invention is to provide a storage tank capable of safely and reliably storing liquified gas such as e.g. hydrogen and that is lightweight. Further, it is a problem to be solved by the present invention to provide a correspondingly improved aircraft or spacecraft. Moreover, it is a problem to be solved by the invention to provide a further improved material that is particularly well suited as a material of a storage tank for liquefied gas.

These problems are solved by a storage tank comprising the features of claim 1 and/or by an aircraft or spacecraft comprising the features of claim 11 and/or by a fibre metal laminate comprising the features of claim 12 and/or by a fibre metal laminate comprising the features of claim 16.

Accordingly, a storage tank for liquified gas, in particular for liquid hydrogen, is proposed which comprises a vessel having a vessel wall formed from a fibre metal laminate, wherein the fibre metal laminate includes metal layers formed with an aluminum alloy and one or more synthetic layers with reinforcing fibres embedded in a thermoplastic matrix.

Furthermore, an aircraft or spacecraft comprising such a storage tank for liquified gas as well as a hydrogen-based propulsion system configured to be supplied with hydrogen at least from the storage tank is proposed.

Still further, the invention provides a first fibre metal laminate which includes metal layers formed with an aluminum alloy and one or more synthetic layers with reinforcing fibres embedded in a thermoplastic matrix, wherein the fibre metal laminate further comprises carbon nanotubes and/or graphene particles.

Still further, the invention provides a second fibre metal laminate which includes metal layers formed with an aluminum alloy, in particular an AlMgSc alloy, and one or more synthetic layers with reinforcing fibres embedded in a thermoplastic matrix, wherein the reinforcing fibres include fibres, in particular carbon fibres, which are coated with an electrically insulating coating before being embedded in the thermoplastic matrix.

An idea underlying the present invention is to combine the advantages of a light-weight metal alloy and a thermoplastic material for use in a vessel wall of a storage tank for liquified gas such as hydrogen. A vessel of a storage tank as proposed by the invention is thus considerably more lightweight than a pure metallic pressure vessel having a wall formed from a single sheet solid metal material. For example, a lightweight storage tank installed in an aircraft is advantageous with regard to the number of passengers and/or the freight that can be carried.

Moreover, a cycle of filling and emptying a storage tank for liquified gas, e.g. hydrogen, is expected to be repeated many times over the lifetime of the tank, in particular when the storage tank is installed in an aircraft for supplying a propulsion system. In the case of use of the storage tank structurally integrated in an aircraft, in particular, the vessel wall is also subjected to take-off and landing loads. In the storage tank of the invention, the fibre metal laminate provides the vessel wall with an improved fatigue behaviour, greater redundancy and improved damage tolerance.

Further, the vessel wall of the storage tank as proposed by the invention advantageously has a low permeability for the gas, in particular for hydrogen. The low permeability is based on the complex microstructure of the thermoplastic matrix in combination with interposed metal layers.

In addition, in the storage tank of the invention, the use of the fibre metal laminate has the further advantage of preventing the build-up of significant static electric charge and/or of quickly discharging static electricity, via the electrically conductive metal layers.

Also, the fibre metal laminate used in the storage tank of the invention may be advantageous in that, with regard to the thermal expansion or contraction of the laminated material combination, e.g. considering a storage tank under internal pressure and filled with a liquid at low temperature, additional mechanical redundancy can be provided. For instance, the combination of the coefficients of thermal expansion of the metal layers and of the reinforcing fibres may be configured to provide or contribute to such redundancy. Also, the fibre metal laminate may in particular tolerate thermal expansion and contraction under pre-defined conditions without separation of individual layers due to thermal stresses.

A further idea of the present invention is that in a fibre metal laminate, carbon nanotubes and/or graphene particles may help to further reduce the permeation of gases, e.g. hydrogen, through the laminate and/or may additionally contribute to controlled, continuous discharge of static electricity.

A still further idea of the present invention is that in a fibre metal laminate comprising at least one synthetic layer with a thermoplastic matrix, an electrically insulating coating on the reinforcing fibres can advantageously be used to prevent galvanic corrosion, in particular when the reinforcing fibres comprise carbon fibres.

Advantageous developments and improvements of the invention are contained in the dependent claims as well as in the description referring to the drawings.

In particular, the storage tank is adapted to storing cryogenic fuel. Such a storage tank, particularly a storage tank adapted to store cryogenic hydrogen, may be advantageous for implementing propulsion of an aircraft without undesired emissions, e.g. of carbon dioxide.

In a development, the metal layers may be formed with an AlMgSc alloy, or aluminum-magnesium-scandium alloy. In particular, the metal layers may be formed from an aluminum alloy from the 5xxx-series, as defined e.g. in the EN 573-3/4 standard.

The metal layers may preferably be formed from a weldable aluminum alloy. For instance, AlMgSc alloys are well suited for welding. As thermoplastic synthetic materials are capable of being softened by heating them, e.g. to temperatures above their glass-transition temperature and/or melting point, and of being re-solidified by cooling, and as this cycle can be repeated if necessary or desired, thermoplastics are well suited for welding by heat, too. Such a fibre metal laminate can be processed in an expedient manner during manufacture of components therefrom. Also, welding helps to reduce weight at joints. In particular, when both the thermoplastic and the metal alloy layers are weldable, butt joint seams can be formed, which helps to save weight.

In a development, the AlMgSc alloy from which the metal layers are formed may be aluminum alloy 5024 or 5028. These aluminum alloys in particular exhibit optimal material properties up to a temperature of approx. 400 °C. Also, these aluminum alloys are advantageous in terms of performance, e.g. fatigue behaviour, and display material properties, with respect to temperature, which are compatible with high performance thermoplastics in terms of heat processing.

According to a further development, the thermoplastic matrix is formed with at least one of a polyphenylene sulfide or a polyimide or a polyaryletherketone. For example, the thermoplastic matrix may be formed with at least one of a polyetheretherketone, a polyetherketoneketone and a polyetherketone. These thermoplastic materials are weldable by heating, and are also reweldable, and further display reduced permeability e.g. compared to thermoset materials, due to their complex microstructure with long molecular chains.

In particular, the reinforcing fibres may comprise glass fibres and/or carbon fibres. While glass fibres have electrically insulating properties and hence can be relatively easily used in combination with metals, carbon fibres may provide additional mechanical strength.

According to an improvement, the reinforcing fibres include carbon fibres which are coated with an electrically insulating coating before being embedded in the thermoplastic matrix, wherein the coating in particular is an epoxy resin that has been applied onto the carbon fibres, for example by an electrochemical procedure, and covers the surface of the carbon fibre. Such a coating helps to prevent contact corrosion.

In a development, the fibre metal laminate further comprises carbon nanotubes and/or graphene particles, wherein the carbon nanotubes and/or graphene particles are dispersed in the thermoplastic matrix of at least one of the synthetic layers or of a sublayer thereof or are dispersed in the thermoplastic matrix in a portion of one of the synthetic layers or of a sublayer thereof in the thickness direction of the fibre metal laminate or are provided in the form of a layer between at least one of the synthetic layers or a sublayer thereof and an adjacent layer or adjacent sublayer. The adjacent layer may be a synthetic layer or the adjacent sublayer may be a synthetic sublayer. The dispersed carbon nanotubes and/or graphene particles provide a further reduction in permeability of the fibre metal laminate for gases, e.g. hydrogen. Further, the dispersed carbon nanotubes and/or graphene particles may also further improve the properties of the fibre metal laminate with regard to preventing the build-up of static electricity.

In another advantageous development, the fibre metal laminate may be substantially free from carbon nanotubes and/or graphene particles. Such a fibre metal laminate may also be used to form a useful, lightweight, reliable, safe storage tank with low permeability for liquified gas, e.g. liquid hydrogen.

According to an advantageous development, the vessel wall comprises at least one weld seam, in particular a butt weld seam, wherein two portions of the fibre metal laminate are joined at the weld seam. Such welded seams contribute to saving weight. In particular, butt weld seams avoid material overlap, which further reduces the weight of the storage tank.

According to an advantageous improvement, an innermost layer of the fibre metal laminate from which the vessel wall is formed, which forms an inner side of the vessel wall, is a metal layer formed with the aluminum alloy. In this improvement, an interior of the vessel of the storage tank can be easily cleaned, which facilitates maintenance. Moreover, the build-up of deposits inside the tank, on the inner side of the vessel wall, can be delayed or prevented. Moreover, a metallic inner side of the vessel wall further improves discharging static electricity.

In particular, further, an outermost layer of the fibre metal laminate, which forms the outer side of the vessel wall, may be a metal layer formed with the aluminum alloy.

Each of the first and second fibre metal laminates proposed by the invention may be used for forming the vessel wall of the storage tank for liquified gas, but may also be useful for other purposes and applications.

In a development of the first fibre metal laminate proposed by the invention, the carbon nanotubes and/or graphene particles may be dispersed in the thermoplastic matrix of at least one of the synthetic layers or of a sublayer thereof or may be dispersed in the thermoplastic matrix in a portion of one of the synthetic layers or of a sublayer thereof in the thickness direction of the fibre metal laminate or may be provided in the form of a layer between at least one of the synthetic layers or a sublayer thereof and an adjacent layer or adjacent sublayer. The adjacent layer may be a synthetic layer. The adjacent sublayer may be a synthetic sublayer. According to a further development of the first or second fibre metal laminate, the metal layers may be formed with an AlMgSc alloy and/or the thermoplastic matrix may be formed with at least one of a polyphenylene sulfide or a polyimide or a polyaryletherketone. For example, the thermoplastic matrix can be formed with a polyetheretherketone or a polyetherketoneketone or a polyetherketone. The AlMgSc alloy may, for example, be aluminum alloy 5024 or 5028. Regarding the advantages thereof, reference is made to the explanations given above.

In a further development of the first fibre metal laminate, the reinforcing fibres may comprise glass fibres and/or carbon fibres and/or the reinforcing fibres may be coated with an electrically insulating coating before being embedded in the thermoplastic matrix. An electrically insulating coating may in particular be provided on carbon fibres used as reinforcing fibres. Reference is made to the above regarding the advantages of the types of fibres and of the coating.

The improvements, developments and enhancements of the invention may be arbitrarily combined with each other whenever this makes sense. Moreover, other possible enhancements, developments and implementations of the invention comprise combinations of features of the invention which have been described above or will be described in the following in relation to the detailed description of embodiments, even where such a combination has not been expressly mentioned.

### BRIEF SUMMARY OF THE DRAWINGS

The present invention is explained in more detail below with reference to the embodiments shown in the schematic figures, wherein:
- Fig. 1: shows an exemplary aircraft in which a storage tank according to embodiments of the invention may be installed;
- Fig. 2: shows a schematic plan view of a storage tank for cryogenic hydrogen according to an embodiment of the invention;
- Fig. 3: shows a schematic perspective view of part of a vessel along with a detail D of part of a cross-section of a vessel wall that is formed from a fibre metal laminate;
- Fig. 4: displays an enlarged schematic cross-sectional view of part of the vessel wall, illustrating the fibre metal laminate;
- Fig. 5: schematically illustrates a coated reinforcing fibre which may be present in some variants of the fibre metal laminate used in the embodiments of the invention;
- Fig. 6: shows a schematic detailed view of part of a synthetic layer in a modified fibre metal laminate for a vessel wall of a storage tank for cryogenic hydrogen in accordance with a further embodiment, wherein the modified fibre metal laminate includes carbon nanotubes and/or graphene particles; and
- Fig. 7: illustrates some variants (a), (b) and (c) of the fibre metal laminate including carbon nanotubes and/or graphene particles, wherein variant (a) comprises carbon nanotubes and/or graphene nanoparticles dispersed throughout a thermoplastic matrix, variant (b) comprises carbon nanotubes and/or graphene nanoparticles dispersed in a thermoplastic matrix within a layer-type part of a synthetic layer or sublayer, and variant (c) comprises a synthetic layer or sublayer pro-vided with a coating formed with carbon nanotubes and/or graphene nanoparticles.

In the figures of the drawing, elements, features and components which are identical, functionally identical and of identical action are denoted in each case by the same reference designations unless stated otherwise. Elements of the drawings are not necessarily drawn to scale.

### DESCRIPTION OF EXEMPLARY EMBODIMENTS

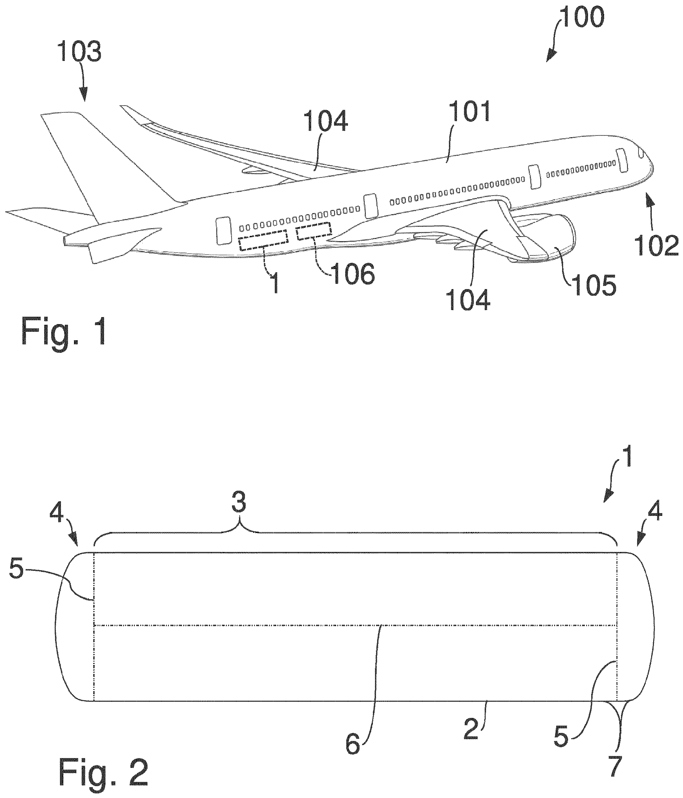

Fig. 1 shows an exemplary aircraft 100 having a fuselage 101, a nose 102, an empennage 103 as well as wings 104 and engines 105. In exemplary manner, the aircraft 100 is configured as a passenger aeroplane. The aircraft 100 is provided with a hydrogen-based propulsion system. In particular, the engines 105 may be configured as gas turbines adapted for combustion of hydrogen with oxygen for the purpose of propulsion. Further, the aircraft 100 may be provided with one or more fuel cells 106, only schematically indicated in Fig. 1, adapted to generate electrical power using hydrogen as well as oxygen. Electrical power obtained in this manner may alternatively be used for propulsion. Further, the aircraft 100 may comprise a hybrid hydrogen-based arrangement for propulsion and energy supply, including both combustion of hydrogen in the jet engines 105 as well as fuel cells 106 for generation of electricity to supply various devices in the aircraft 100. Such aircraft 100 may be considered zero emission aircraft, avoid the emission of carbon dioxide during flight, and can significantly contribute to sustainable, environment-friendly air travel, by virtue of hydrogen-combustion and/or hydrogen-electric propulsion.

While the oxygen can be obtained from the ambient air, liquid hydrogen is stored within the aircraft 100 in one or more storage tanks 1. A storage tank 1 for liquified, cryogenic hydrogen in accordance with an embodiment of the invention is schematically shown in Fig. 2. The hydrogen-based propulsion system of the aircraft 100 is supplied with hydrogen from the storage tank 1.

Fig. 2 shows that the liquid hydrogen storage tank 1 has a generally elongate shape and comprises a pressure vessel 2 as well as further installations, not shown in detail in the figures, which may be provided for filling the storage tank 1 and for supplying the hydrogen from the storage tank 1 e.g. to the engines 105 or fuel cells 106.

The vessel 2 of Fig. 2 is elongate and comprises a substantially cylindrical center section 3 as well as two dome-shaped end sections 4. The center section 3 and the dome-shaped end sections 4 are joined at peripheral butt weld seams 5 which follow an approximately circular path. Moreover, the center section 3 comprises a longitudinal butt weld seam 6 which serves, in the example displayed, for joining ends of a sheet of material that has been bent to form a cylinder. Alternatively, for instance, the cylindrical center section 3 may be formed from shell-type sections, and in this case, the center section 3 may comprise two or more longitudinal butt weld seams 6.

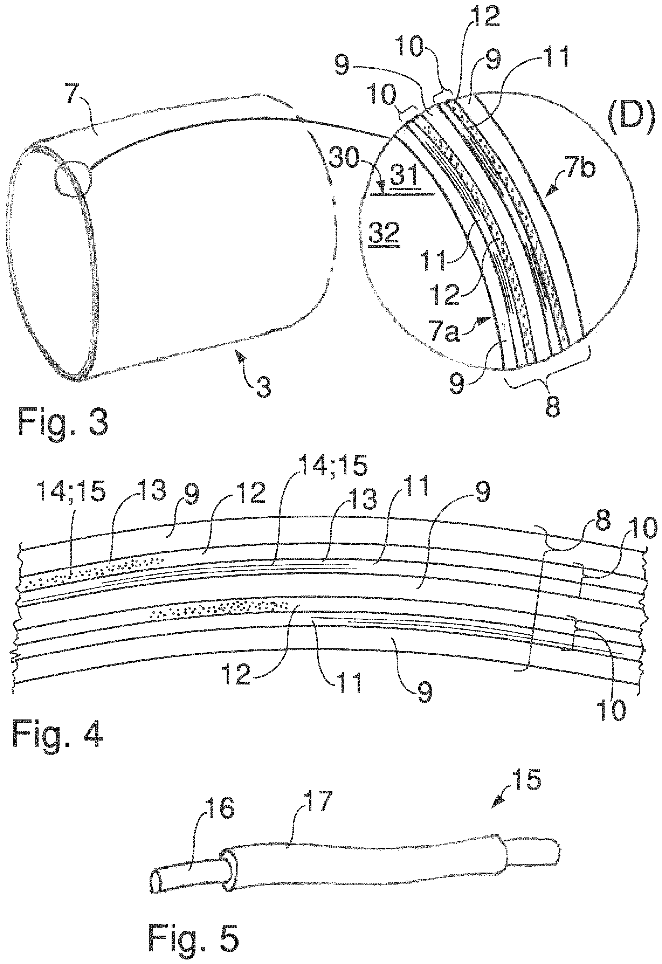

Within the vessel 2, the liquid, cryogenic hydrogen will be stored. The vessel 2 is adapted to be pressurized, e.g. due to evaporation of liquid hydrogen, which then fills a space inside the vessel 2 above the liquid level. For example, the vessel 2 may be configured to safely sustain an internal pressure of at least approximately 3 bar, but the vessel 2 may in variants be designed for internal pressures higher or lower than 3 bar. Fig. 3 indicates, in exemplary manner, the center section 3 of the vessel 2, the vessel wall 7 in the center section 3, and a detail D illustrating the cross-sectional structure of the vessel wall 7. Even though in Fig. 3, the center portion 3 is shown, it should be understood that the dome-shaped end sections 4 preferably are formed with a vessel wall 7 that has the same structure, and is made from the same material, as the vessel wall 7 of the center section 3 which will be described below in greater detail. Fig. 3 further schematically shows an exemplary liquid level 30, with boiled-off, gaseous hydrogen 31 above and liquid hydrogen 32 below the liquid level 30.

A vessel wall 7 of the pressurizable vessel 2 is formed from a fibre metal laminate 8, configured as a hybrid layered material with metal layers 9 and synthetic layers 10. The metal layers 9 are formed from an aluminum-magnesium-scandium alloy or AlMgSc alloy from the 5xxx alloy series. Preferred examples of aluminum alloys that may be used for forming the layers 9 are aluminum alloy 5024 or aluminum alloy 5028. Such alloys have optimal material properties at temperatures up to about 400 °C. AlMgSc alloys are advantageous in terms of performance, e.g. with regard to the fatigue behaviour, and display properties, in relation to temperature, that are compatible with high performance thermoplastics with respect to heat processing.

The synthetic layers 10 are formed with a matrix 13 of a thermoplastic material, in particular a high performance thermoplastic, which for example may be any of a polyphenylene sulfide or PPS, a polyimide or PI, a polyaryletherketone or PAEK. For example, the thermoplastic used to form the matrix 13 may be a polyetherketone or PEK or a polyetheretherketone or PEEK or a polyetherketoneketone or PEKK. These thermoplastics are weldable, by heating them, and are re-weldable. Further, the thermoplastics mentioned displayed reduced permeability for liquid hydrogen in comparison with thermoset materials, which is due to the complex microstructure of these thermoplastics with long molecular chains.

Figs. 3 and 4 each show a fibre metal laminate 8 including three metal layers 9 as well as two synthetic layers 10, wherein each of the synthetic layers 10 comprises a first sublayer 11 and a second sublayer 12. The sublayers 11, 12 may be formed as thickness regions of an integral layer 10.

Each sublayer 11, 12, and thus the synthetic layer 10, is formed with the thermoplastic matrix 13 and reinforcing fibres 14 embedded in the matrix 13. In the first thickness region or sublayer 11, the fibres 14 extend substantially in a circumferential direction of the center section 3, while in the second thickness region or sublayer 12, the fibres 14 extend substantially parallel to a longitudinal axis of the center section 3. However, the fibres 14 may be arranged different from the example displayed in Figs. 3 and 4, in accordance with the mechanical properties of the vessel wall 7 that are desired, and accordingly, more or fewer sublayers may be provided.

Although Figs. 3 and 4 show three metal layers 9 and two synthetic layers 10, a different number of metal and/or synthetic layers 9, 10 is conceivable. In an exemplary variant, one synthetic layer 10 between two metal layers 9 is conceivable. Yet, it is preferred that an innermost layer of the fibre metal laminate 8, which is oriented towards the interior of the vessel 2 containing the liquid and gaseous hydrogen 32, 31, and forms an inner side 7a of the vessel wall 7, is formed as a metal layer 9. Also, an outermost layer of the laminate 8 is preferably formed as a metal layer 9, as displayed in Figs. 3, 4, and forms an outer side 7b of the vessel wall 7.

The reinforcing fibres 14 may be formed as glass fibres or as coated carbon fibres or a combination of both. Glass fibres as reinforcing fibres 14 will not cause galvanic corrosion. When carbon fibres are used as reinforcing fibres 14 in the laminate 8, the carbon fibres may be coated with an electrically insulating coating.

Fig. 5 schematically shows a coated carbon fibre 15, which may be used as reinforcing fibre 14, comprising a carbon fibre 16 coated with an electrically insulating epoxy coating 17. Even though in Fig. 5, ends of the carbon fibre 16 are shown for illustration, it should be understood that preferably the entire surface of the carbon fibres 16 is covered by the coating 17. For example, the coating 17 may be applied using an electrochemical process. The coating 17 preferably is temperature-resistant, e.g. up to a temperature of about 400 °C, while the carbon fibre 16 as such is temperature-resistant up to a temperature of, for example, about 650 °C and may in some variants resist temperatures of up to approx. 700°C. The coating 17 prevents galvanic corrosion in case of contact of the fibre 15 with the metal alloy layers 9. The coating 17 is applied before the fibres 15 are embedded in the matrix 13. For the coating 17, a coating as described in EP 3 461 620 A1, or a coating as described in Schutzeichel et al., "Experimental characterization of multi functional polymer electrolyte coated carbon fibres", J. Functional Composites, Vol. 1, 025001, 2019, may, in some exemplary embodiments, be used. The reinforcing fibre 15 thus may in particular be formed as a polymer electrolyte coated carbon fibre or PECCF.

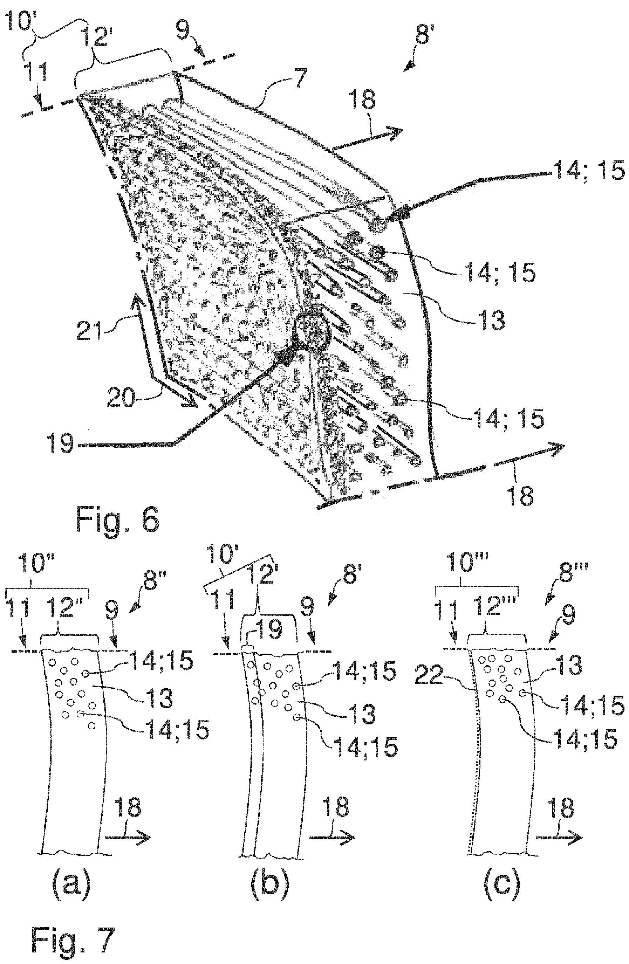

A portion of a vessel wall of a storage tank for cryogenic hydrogen in accordance with a further embodiment is shown in Fig. 6. The storage tank of the further exemplary embodiment of Fig. 6 corresponds to the storage tank 1 illustrated in Fig. 2 except in that in the embodiment of Fig. 6, the vessel wall 7 is formed from a modified fibre metal laminate 8'. The modified fibre metal laminate 8' corresponds to the fibre metal laminate 8 except in that the modified fibre metal laminate 8' of the embodiment of Fig. 6 additionally comprises carbon nanotubes and/or graphene particles. In contrast, the laminate 8 described above is in particular substantially free from added carbon nanotubes and graphene particles.

The modified fibre metal laminate 8' comprises metal layers 9 as described above, as well as one or more synthetic layers. The synthetic layers of the modified laminate 8' are configured in the same manner as the layers 10 of the laminate 8, using a thermoplastic matrix material 13 and reinforcing fibres 14 and/or 15 as explained above, except in that at least one synthetic layer 10' out of the synthetic layers of the modified laminate 8' is additionally provided with the carbon nanotubes and/or the graphene particles.

For example, the modified laminate 8' may comprise at least one synthetic layer 10' having a sublayer 12' which includes a thermoplastic matrix 13 and reinforcing fibres 14 embedded therein. The reinforcing fibres 14 may be coated reinforcing fibres 15 as described with reference to Fig. 5 or may be fibres without an additional coating, e.g. glass fibres. Further, in a portion 19 of the sublayer 12' in the thickness direction 18 of the modified laminate 8', the sublayer 12' includes carbon nanotubes or graphene particles, or both, which are dispersed in the thermoplastic matrix 13 within the portion 19. The portion 19 is arranged adjacent to one of the faces of the sublayer 12' and may be in contact e.g. with the further synthetic sublayer 11 in the finished laminate 8'. The portion 19 extends substantially along the entire main surface of extension of the laminate 8', schematically indicated in Fig. 6 by arrows 20 and 21.

For example, both the reinforcing fibres 15, used as the reinforcing fibres 14 and formed as carbon fibres 16 with coating 17, and the carbon nanotubes and graphene particles are well compatible with the thermoplastic resin forming the matrix 13. Alternatively, glass fibres may for instance be used as the reinforcing fibres 14.

Fig. 7 illustrates variants (a), (b) and (c) of a fibre metal laminate 8", 8' and 8‴ including carbon nanotubes and/or graphene particles in accordance with embodiments of the invention. The laminates 8", 8' and 8‴ differ in the way the carbon nanotubes and/or graphene particles are arranged, but are formed in substantially the same manner besides this.

In variant (a), the carbon nanotubes or graphene particles, or both, are dispersed in the thermoplastic resin before impregnating the reinforcing fibres 14. A pre-preg may be formed with the fibres 14, or 15, impregnated with the thermoplastic resin containing the carbon nanotubes and/or graphene particles. When a synthetic sublayer 12" of a synthetic layer 10" is formed from such a pre-preg, the carbon nanotubes and/or graphene particles are dispersed throughout the sublayer 12" in the thickness direction 18, i.e. within the entire thickness of the sublayer 12".

In variant (b), a portion 19 of sublayer 12' in the thickness direction 18 contains the carbon nanotubes and/or graphene particles. The portion 19 may be formed by spraying the carbon nanotubes and/or graphene particles onto a still heated thermoplastic pre-preg including the thermoplastic matrix 13 and the reinforcing fibres 14, or 15. Doing so results in a partial penetration of the carbon nanotubes and/or graphene particles into the surface of the material, which is still soft. In this manner, a sublayer 12' as also shown in Fig. 6 can be obtained. The portion 19 may be considered a "3D"-layer containing the carbon nanotubes and/or graphene particles.

In variant (c), the carbon nanotubes and/or graphene particles have been sprayed onto a pre-preg comprising a thermoplastic matrix 13 which has already solidified. By spraying the carbon nanotubes and/or graphene particles onto the hardened surface, a coating 22 formed with the carbon nanotubes and/or graphene particles on a synthetic sublayer 12‴ of a synthetic layer 10‴ is formed. The coating 22 may have a thickness that is smaller than the extent of the portion 19 in the thickness direction 18. The coating 22 may be considered a "2D"-layer containing the carbon nanotubes and/or graphene particles.

One or more synthetic layers 10', 10" and/or 10‴ may in further variants be combined within a fibre metal laminate with each other and with one or more synthetic layer(s) 10 as described above which is/are free from carbon nanotubes and graphene particles.

In Fig. 7(a), the sublayer 12" is configured without additional coating formed with carbon nanotubes and/or graphene particles, such as e.g. coating 22.

However, in further variants, the sublayer 12" with the carbon nanotubes and/or graphene particles dispersed throughout the thermoplastic matrix 13 may additionally be provided with a portion 19 including additional carbon nanotubes and/or graphene particles as illustrated in Fig. 7(b) and described above, or the sublayer 12" may be provided with an additional, thin coating 22 with additional carbon nanotubes and/or graphene particles as illustrated in Fig. 7(c).

In order to form the storage tank 1, displayed in schematic manner in Fig. 2, portions of the fibre metal laminate 8, 8', 8", 8‴ in accordance with one of the embodiments and variants described above can be used. The fibre metal laminate portions are joined at the butt weld joints 5, 6 by welding, e.g. by friction stir welding, or are joined using e.g. lap joints, for instance by welding two facing metal layers 9 to each other, for example by resistance welding using heating cables, or by induction welding.

With the embodiments described herein above, the following advantages may be obtained:
- The weight of the fibre metal laminate and of the pressure vessel 2 formed from that laminate is lower than the weight of a purely metallic pressure vessel, on the basis of the reduced overall density of the hybrid metal-thermoplastic laminate.
- An improved fracture mechanics behaviour, over the whole laminate, compared to a single solid metal layer is achieved. Redundancy is obtained between the layers, which means that a crack in one cracked metal layer will not automatically transfer to the next layer; thus, damage tolerance can be improved.
- The fatigue behaviour of the material is improved, which is particularly advantageous for instance with regard to a hydrogen tank, which undergoes many cycles of refueling and emptying, and many take-off and landing cycles when installed in an aircraft.
- Permeation of hydrogen through the vessel wall is considerably reduced by virtue of the metal layers in comparison with a pure carbon composite material. Further, using a thermoplastic matrix, permeability may be further lowered in comparison with thermoset layers, based on the extensive molecular microstructure, which slows permeation of gases.
- Static electricity can be led away and discharged, which enables a quicker refueling process, in comparison with a pure carbon fibre reinforced plastics material, in particular when the innermost layer of the fibre metal laminate forming the vessel wall is a metallic layer, e.g. from AlMgSc alloy, that is in direct contact with the liquid hydrogen in the storage tank 1.
- Maintenance of the interior of the storage tank 1 is considerably facilitated. With the fibre metal laminate proposed according to the embodiments above, the innermost layer of the material forming the vessel wall 7 can be chosen to be a metallic layer, e.g. from AlMgSc alloy. Such a metallic layer can be comparatively easily cleaned, due to its surface micro structure, which is smoother in comparison with the surface of carbon fibre reinforced plastics, for example. Thus, undesired depositions of impurities and/or external particles cannot easily develop, and the build-up of such deposits is delayed.
- The fibre metal laminate is weldable, so that in expedient and weight-saving manner, the tube-shaped center section 3 and the dome-shaped end sections 4 can be joined and in particular also the longitudinal seam 6 in the center section 3 can be formed.
- When carbon fibres are used as reinforcing fibres 14, galvanic corrosion due to contact between carbon fibres and metal alloy material(s) can be prevented using an electrically insulating coating 17 on each of the carbon fibres 16. The temperature-resistance of the carbon fibres 16 up to 650 °C or 700 °C and the temperature-resistance of the coating 17 up to 400 °C is well suited for thermal applications like welding.
- Permeation of hydrogen through the vessel wall 7, in particular through the thermoplastic layer(s), can be further suppressed by the dispersed carbon nanotubes and/or graphene particles.
- Moveover, the dispersed carbon nanotubes and/or graphene particles may additionally contribute to quickly discharging and/or preventing static electricity.

Although the invention has been completely described above with reference to preferred embodiments, the invention is not limited to these embodiments but may be modified in many ways.

In particular, the fibre metal laminate of the invention may be used in other, non-structural or structural applications beyond the field of storage tanks for liquified gas.

### LIST OF REFERENCE SIGNS

- 1: storage tank
- 2: vessel
- 3: center section
- 4: dome-shaped end section
- 5: peripheral butt weld seam
- 6: longitudinal butt weld seam
- 7: vessel wall
- 7a: inner side (vessel wall)
- 7b: outer side (vessel wall)
- 8: fibre metal laminate
- 8': fibre metal laminate
- 8": fibre metal laminate
- 8‴: fibre metal laminate
- 9: metal layer
- 10: synthetic layer
- 10': synthetic layer
- 10": synthetic layer
- 10‴: synthetic layer
- 11: first sublayer
- 12: second sublayer
- 12': second sublayer
- 12": second sublayer
- 12‴: second sublayer
- 13: thermoplastic matrix
- 14: reinforcing fibres
- 15: coated reinforcing fibre
- 16: carbon fibre
- 17: electrically insulating coating
- 18: thickness direction
- 19: portion comprising carbon nanotubes and/or graphene particles
- 20: arrow
- 21: arrow
- 22: coating
- 30: liquid level
- 31: gaseous hydrogen
- 32: liquid hydrogen
- 100: aircraft
- 101: fuselage
- 102: nose
- 103: empennage
- 104: wing
- 105: engine
- 106: fuel cell

## Claims

1. Storage tank (1) for liquified gas, in particular for liquid hydrogen (32), comprising a vessel (2) having a vessel wall (7) formed from a fibre metal laminate (8; 8'; 8"; 8‴) including metal layers (9) formed with an aluminum alloy and one or more synthetic layers (10; 10'; 10"; 10‴) with reinforcing fibres (14; 15) embedded in a thermoplastic matrix (13).

2. Storage tank according to claim 1,
**characterized in that** the metal layers (9) are formed with an AlMgSc alloy.

3. Storage tank according to claim 2,
**characterized in that** the AlMgSc alloy is aluminum alloy 5024 or 5028.

4. Storage tank according to at least one of the preceding claims,
**characterized in that** the thermoplastic matrix (13) is formed with at least one of a polyphenylene sulfide or a polyimide or a polyaryletherketone.

5. Storage tank according to at least one of the preceding claims,
**characterized in that** the thermoplastic matrix (13) is formed with at least one of a polyetheretherketone, a polyetherketoneketone and a polyetherketone.

6. Storage tank according to at least one of the preceding claims,
**characterized in that** the reinforcing fibres (14; 15) comprise glass fibres and/or carbon fibres.

7. Storage tank according to at least one of the preceding claims,
**characterized in that** the reinforcing fibres (15) include carbon fibres (16) which are coated with an electrically insulating coating (17) before being embedded in the thermoplastic matrix (13), wherein the coating (17) in particular is an epoxy resin that has been applied onto the carbon fibres (16), for example by an electrochemical procedure, and covers the surface of the carbon fibre (16).

8. Storage tank according to at least one of the preceding claims,
**characterized in that** the fibre metal laminate (8'; 8"; 8‴) further comprises carbon nanotubes and/or graphene particles, wherein the carbon nanotubes and/or graphene particles are dispersed in the thermoplastic matrix (13) of at least one of the synthetic layers or of a sublayer (12") thereof or are dispersed in the thermoplastic matrix (13) in a portion (19) of one of the synthetic layers or of a sublayer (12') thereof in the thickness direction (18) of the fibre metal laminate (8') or are provided in the form of a layer (22) between at least one of the synthetic layers or a sublayer (12‴) thereof and an adjacent layer or adjacent sublayer (11).

9. Storage tank according to at least one of the preceding claims,
**characterized in that** the vessel wall (7) comprises at least one weld seam (5, 6), in particular a butt weld seam (5, 6), wherein two portions of the fibre metal laminate (8) are joined at the weld seam (5, 6).

10. Storage tank according to at least one of the preceding claims,
**characterized in that** an innermost layer of the fibre metal laminate (8; 8'; 8"; 8‴) from which the vessel wall (7) is formed, which forms an inner side (7a) of the vessel wall (7), is a metal layer (9) formed with the aluminum alloy, and in particular **in that** further, an outermost layer of the fibre metal laminate (8; 8'; 8"; 8‴), which forms the outer side (7b) of the vessel wall (7), is a metal layer (9) formed with the aluminum alloy.

11. Aircraft or spacecraft (100) comprising a storage tank (1) for liquified gas according to at least one of the preceding claims as well as a hydrogen-based propulsion system (105, 106) configured to be supplied with hydrogen at least from the storage tank (1).

12. Fibre metal laminate (8'; 8"; 8‴) which includes metal layers (9) formed with an aluminum alloy and one or more synthetic layers (10; 10'; 10"; 10‴) with reinforcing fibres (14; 15) embedded in a thermoplastic matrix (13), wherein the fibre metal laminate (8'; 8"; 8‴) further comprises carbon nanotubes and/or graphene particles.

13. Fibre metal laminate according to claim 12,
**characterized in that** the carbon nanotubes and/or graphene particles are dispersed in the thermoplastic matrix (13) of at least one of the synthetic layers or of a sublayer (12") thereof or are dispersed in the thermoplastic matrix (13) in a portion (19) of one of the synthetic layers or of a sublayer (12') thereof in the thickness direction (18) of the fibre metal laminate (8') or are provided in the form of a layer (22) between at least one of the synthetic layers or a sublayer (12‴) thereof and an adjacent layer (11) or adjacent sublayer.

14. Fibre metal laminate according to claim 12 or 13,
**characterized in that** the metal layers (9) are formed with an AlMgSc alloy and/or **in that** the thermoplastic matrix (13) is formed with at least one of a polyphenylene sulfide or a polyimide or a polyetherketone or a polyaryletherketone or a polyetheretherketone or a polyetherketoneketone.

15. Fibre metal laminate according to at least one of claims 12 to 14,
**characterized in that** the reinforcing fibres (14; 15) comprise glass fibres and/or carbon fibres and/or **in that** the reinforcing fibres (15) are coated with an electrically insulating coating (17) before being embedded in the thermoplastic matrix (13).

16. Fibre metal laminate (8; 8'; 8"; 8‴) which includes metal layers (9) formed with an aluminum alloy, in particular an AlMgSc alloy, and one or more synthetic layers (10; 10'; 10"; 10‴) with reinforcing fibres (15) embedded in a thermoplastic matrix (13), wherein the reinforcing fibres (15) include fibres (16), in particular carbon fibres (16), which are coated with an electrically insulating coating (17) before being embedded in the thermoplastic matrix (13).
